# FASCICULE DE BREVET EUROPEEN

(11) **EP 2 382 533 B1**
(45) Date de publication et mention de la délivrance du brevet: **10.07.2013**
(21) Numéro de dépôt: 09737434.2
(22) Date de dépôt: 21.10.2009
(51) Int. Cl.: G06F 3/147

(54) **SYSTÈME PERFECTIONNÉ D'ÉTIQUETTES ÉLECTRONIQUES NOTAMMENT POUR L'AFFICHAGE DE DONNÉES SUR UN LIEU DE VENTE**
SYSTEM VON ELEKTRONISCHEN PREISSCHILDERN INSBESONDERE ZUR DATENANZEIGE IN GESCHÄFTEN
IMPROVED ELECTRONIC LABEL SYSTEM, IN PARTICULAR FOR DISPLAYING DATA AT A POINT OF SALE

(30) Priorité: 21.10.2008 FR 0857145
(43) Date de publication de la demande: 02.11.2011
(73) Titulaire: Store Electronic Systems, 95100 Argenteuil (FR)
(72) Inventeur: MARTIN, Yves, F-75015 Paris (FR); PREVET, Raphaël, F-78400 Chatou (FR)
(74) Mandataire: Regimbeau
(86) Numéro de dépôt international: PCT/EP2009/063824
(87) Numéro de publication internationale: WO 2010/046405

(56) Documents cités:
- DE-T2- 69 133 268
- US-A- 6 047 263
- US-A1- 2007 024 551

## Description

L'invention concerne de manière générale des systèmes d'affichage de prix commandés à distance dans les magasins.

L'utilité de tels système est essentiellement de permettre, au niveau des rayonnages d'un site tel qu'un supermarché, hypermarché ou toute autre surface de vente, de présenter au chaland, pour chaque article présenté à la vente, un prix correspondant de façon fiable au prix tel qu'il figure dans le fichier central du site, c'est-à-dire au prix tel qu'il sera effectivement utilisé en caisse pour le paiement de l'article.

Un autre avantage de ces systèmes connus est de permettre de réaliser des changements de prix automatisés dans des délais beaucoup plus courts qu'avec un affichage manuel, que ce soit pour des périodes particulières de promotion sur le site, pour tout ou partie des articles présentés à la vente, pour répercuter des changements de tarifs, pour faire face à des situations d'inflation où les prix doivent être augmentés très fréquemment, etc...

D'autre part, il existe en matière d'affichage de prix de nombreuses contraintes, notamment légales, quant à la nature des prix affichés (prix unitaire, prix promotionnel, etc...), qui doivent être respectés par les systèmes électroniques de la même manière que par les affichages papier.

Ainsi les systèmes d'étiquettes électroniques, bien qu'ils tendent à devenir de plus en plus sophistiqués au fil du temps, restent toutefois relativement rigides quand aux différentes possibilités d'affichage, et quant à l'organisation temporelle et spatiale de ces différentes possibilités.

-Le document FR2802693 au nom de la Demanderesse décrit un système d'étiquettes électroniques qui offre de nombreuses possibilités d'affichage, notamment pour faire face aux contraintes précédemment décrites, qui permettent d'afficher de façon relativement souple et rapide des informations autres que des prix comme des informations liées aux produits et/ou aux étiquettes elles-mêmes, de modifier un ensemble donné d'étiquettes selon des échéances précises et bien déterminées quant à leur instant de début et/ou à leur durée. De plus, après avoir modifié temporairement les données affichées par une étiquette, le système assure un retour de celle-ci à son état initial. Pour cela, le système d'étiquettes électroniques décrit comporte une station centrale et une série d'étiquettes électroniques réparties, ainsi que des moyens de communication sans fils pour transmettre des informations de prix de la station centrale vers les étiquettes. Chaque étiquette comprend un jeu de registres de prix et un jeu de registres de coefficients contenus dans une zone mémoire, ainsi que des moyens de commande d'affichage. De plus, chaque étiquette comporte un afficheur ayant au moins deux zones d'affichage de prix. Les informations transmises de la station centrale à une étiquette comportent des instructions d'affectation entre, d'une part, un prix calculé à partir d'un prix contenu dans l'un des registres de prix multiplié par un coefficient donné contenu dans l'un des registres de coefficients, et, d'autre part, une zone d'affichage de prix donnée. Selon le document FR2802693, le système d'étiquettes électroniques décrit peut directement afficher des informations contenues dans la zone mémoire sur l'afficheur à la réception d'instructions transmises par la station centrale contenant une donnée d'affectation du contenu de la zone mémoire déterminée à une zone d'affichage déterminée de l'afficheur et une donnée de temporisation à partir de laquelle l'étiquette détermine un paramètre temporel relatif à cette affectation.

Toutefois un tel système d'étiquettes électroniques ne permet pas de répondre aux besoins toujours croissants des clients, propriétaires de sites de ventes, et ne permet pas de s'adapter de manière simple et économique aux différentes situations. Les informations à afficher sont de plus en plus nombreuses et complexes sans qu'il soit possible d'étendre la surface d'affichage ni l'encombrement des étiquettes afin que les articles en ventes soient toujours bien visibles et accessibles au chaland du site de vente.

Un but de l'invention est de fournir un système d'électronique amélioré permettant de grandes possibilités d'affichage tout en restant simple et économique à fabriquer.

A cet effet, il prévu, selon l'invention un système d'étiquettes électroniques notamment pour l'affichage des prix dans un magasin, comprenant une station centrale et une série d'étiquettes électroniques répartie, ainsi que des moyens de communication notamment sans fil pour transmettre de informations de la station centrale vers les étiquettes, chaque étiquette électronique comportant un microcontrôleur destiné à mettre en oeuvre un micrologiciel et connecté à une mémoire comportant une série de registres et à un afficheur à cristaux liquide comportant au moins une zone d'affichage, chaque étiquette comportant un drapeau dont la valeur lui permet de fonctionner en mode numérique ou en mode alphanumérique ou en mode affichage ouvert de manière exclusive.

D'autres aspects, buts et avantages de l'invention apparaîtront à la lecture de la description détaillée ci-après d'un mode de réalisation préférée de l'invention, donné à titre d'exemple non limitatif, faite en références aux dessins annexés :
- la figure 1 est un schéma de principe du choix du mode de fonctionnement d'une étiquette électronique d'un système d'étiquette électronique selon l'invention ;
- la figure 2 est une vue de face d'un afficheur pour le mode de fonctionnement numérique ;
- la figure 3 est une vue de face d'un afficheur pour le mode de fonctionnement alphanumérique ; et,
- la figure 4 est une vue de face d'un afficheur pour le mode de fonctionnement en affichage ouvert dit « open screen ».

De manière préliminaire, il est à noter que dans la description qui va suivre, le terme « registre », « mémoire » ou encore « zone mémoire » sera utilisé pour désigner des emplacements, dans une étiquette électronique, d'informations variables, que ce soient des données, des paramètres, des commandes, etc... De plus, le terme « digit » sera en général compris comme un quartet (suite de quatre bits), ceci n'étant bien entendu nullement limitatif.

Les étiquettes électroniques du système selon l'invention présente une architecture générale comprenant principalement :
- un pilotage par microcontrôleur, en association avec un système d'exploitation contenu dans une mémoire morte et avec des circuits intégrés spécifiques appropriés,
- un jeu de mémoires ou registres pour mémoriser des variables (prix, adresse d'étiquette, différents drapeaux, images écran, etc...),
- un circuit de réception de signaux transmis par une station centrale ou une unité portable, en association avec une antenne de réception (cas d'une transmission radio) ou d'un élément photosensible (cas d'une transmission infrarouge), par exemple,
- un circuit de commande d'affichage notamment à partir du contenu des mémoires,
- une pile pour l'alimentation des différents circuits,
- un boitier.

Pour plus de détails sur une telle étiquette électronique, il est possible de se référer par exemples aux documents FR 2 658 645 et FR 2 8002 693 au nom de la Demanderesse.

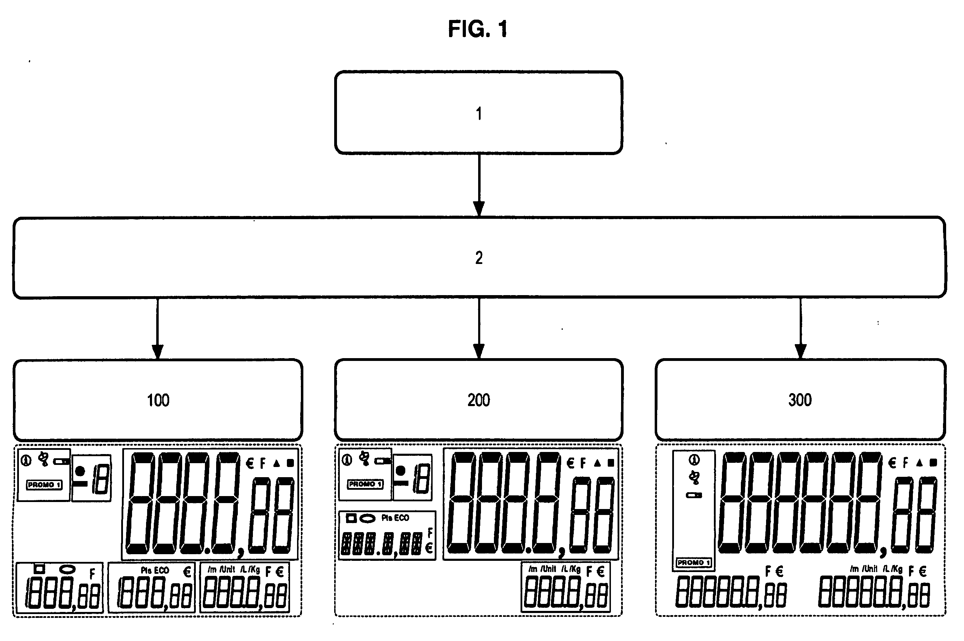

En référence à la figure 1, nous allons décrire le fonctionnement d'une étiquette électronique pour un système selon l'invention. L'étiquette électronique est capable de fonctionner, ici, selon trois modes de fonctionnement :
- un mode numérique associé à un afficheur à cristaux liquides 100 présentant, ici, quatre zones numériques et une zone compteur ;
- un mode alphanumérique associé à un afficheur à cristaux liquides 200 présentant, ici, deux zones numériques, une zone alphanumérique et une zone compteur ; et,
- un mode de fonctionnent en affichage ouvert, dit « open screen » associé à un afficheur à cristaux liquides 300 d'affichage-libre limité à un nombre de segments prédéterminé, ici cent quatre-vingts douze segments.

Quelque soit le choix du mode de fonctionnement pour l'étiquette électronique, l'afficheur à cristaux liquides comporte un nombre déterminé de pictogrammes généraux et/ou système.

Le microcontrôleur fonctionne selon des instructions contenues dans un micrologiciel 1 qui est commun aux trois modes de fonctionnement précités.

Cela permet d'avoir une seule chaine de fabrication et de montage d'étiquettes électroniques. Le choix du mode fonctionnement 2 s'effectue en fin de cette chaine et est figé par une configuration sur le circuit imprimé associée à l'afficheur à cristaux liquides 100, 200, 300 correspondant au choix de fonctionnement de l'étiquette électronique.

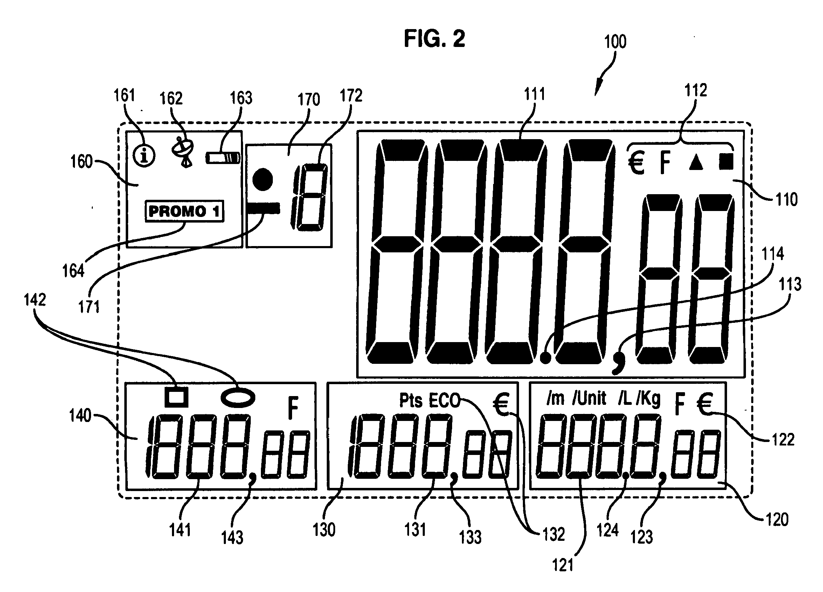

Plus en détail, la version numérique de l'étiquette électronique comporte un afficheur à cristaux liquides 100 illustré en figure 2. Ici, les capacités d'affichage sont limitées à cent quatre-vingt douze segments adressable par le microcontrôleur et sont répartis comme suit :
- une zone d'affichage de prix principal 110 constituée de six chiffres 111 à sept segments, deux séparateurs des centimes 113 et des milliers 114, et quatre symboles/monnaies 112 ;
- une première zone d'affichage de prix secondaire 120 constituée de six chiffres 121 à sept segments, deux séparateurs des centimes 123 et des milliers 124 et six symboles/monnaies 122 ;
- une deuxième zone d'affichage de prix secondaire 130 constituée d'un « un » plus cinq chiffres 131 à sept segments, un séparateur des centimes 133 et trois symboles/monnaies 132 ;

- une troisième zone d'affichage de prix secondaire 140 constituée d'un « un » plus cinq chiffres 141 à sept segments, un séparateur des centimes 143 et trois symboles/monnaies 142 ;
- une zone d'affichage de compteur 170 constitué de dix pictogrammes 171,172 dont sept pictogrammes 172 peuvent s'associer pour représenter un chiffre complet (en variante d'autres configurations sont possible); et
- une zone d'affichage de pictogrammes 160 constitués de quatre pictogrammes généraux et/ou systèmes 161, 162, 163, 164.

Le jeu de mémoires de l'étiquette électronique fonctionnant en mode numérique comporte :
- quatre registres compteur de dix bits chacun permettant de mémoriser une image écran affichable directement dans la zone d'affichage de compteur 170 ;
- quinze registres de prix/données/coefficient permettant de mémoriser des données que le microcontrôleur utilise pour afficher des informations dans les zones d'affichage de prix 110,120,130,140 ; la taille des ces registres est de six digits et une puissance de 10 en format coefficient ou six symboles codés et quatre codages de séparateurs et des symboles/monnaies en format prix ;
- quatre registres d'affichage ouvert (« open screen ») de cent quatre-vingt huit bits permettant de mémoriser une image écran affichable directement dans les zones d'affichage de prix 110,120,130,140 et d'affichage de compteur 170 ;

- un registre de séquence d'affichage « client » permettant de réaliser une alternance de quatre affichages en mode client ;
- un registre de séquence d'affichage « gestion » permettant de réaliser une alternance de quatre affichages en mode gestion ; et,
- un registre de séquence d'affichage « gestion » ouvert (« open screen ») permettant de réaliser une alternance de quatre affichages en mode ouvert gestion.

Il est à noter que trois des registres de prix/données/coefficient sont capable de contenir des données alphanumériques et devenir ainsi des registres alphanumériques. Toutefois, en mode de fonctionnement numérique, l'étiquette électronique ne sait pas manipuler ces données alphanumériques. Seule une étiquette en mode de fonctionnement alphanumérique sait le faire, comme nous allons le voir ci après.

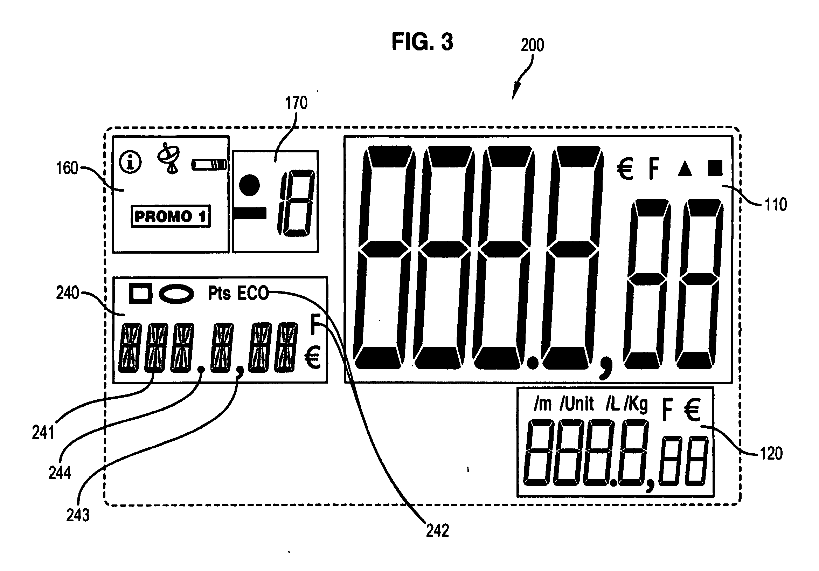

En référence à la figure 3, la version alphanumérique de l'étiquette électronique comporte un afficheur à cristaux liquides 200. Ici, les capacités d'affichage sont limitées à cent quatre-vingt douze segments adressable par le microcontrôleur et sont répartis comme suit :
- une zone d'affichage de prix principal 110;
- une zone d'affichage de prix secondaire 120;
- une zone d'affichage alphanumérique 240 constituée 6 caractères 241 à douze segments, deux séparateur des centimes 243 et des milliers 244 et six symboles/monnaies 242 ;
- une zone d'affichage de compteur 170; et
- une zone d'affichage de pictogrammes 160.

L'afficheur 200 de cette étiquette électronique se différencie de l'afficheur 100 précédemment décrit par le fait que les deux zones d'affichages de prix 130,140 sont remplacées par la zone d'affichage alphanumérique 240.

Le jeu de mémoires de l'étiquette électronique fonctionnant en mode-alphanumérique comporte :
- quatre registres compteur de dix bits chacun permettant de mémoriser une image écran affichable directement dans la zone d'affichage de compteur 170 ;
- douze registres de prix/données/coefficient permettant de mémoriser des données que le microcontrôleur utilise pour afficher des informations dans les zones d'affichage de prix 110, 120 ; la taille des ces registres est de six digits et une puissance de 10 en format coefficient ou six symboles codés et quatre codage de séparateurs et des symboles/monnaies en format prix ;
- trois registres alphanumériques de quinze caractères pour l'un et de sept caractères pour les deux autres permettant de mémoriser des informations que le microcontrôleur peut afficher dans la zone d'affichage alphanumérique 240 ;
- quatre registres d'affichage ouvert (« open screen ») de cent quatre-vingt huit bits permettant de mémoriser une image écran affichable directement dans les zones d'affichage 110,120,240 et d'affichage de compteur 170;
- un registre de séquence d'affichage « client » permettant de réaliser une alternance de quatre affichages en mode client ;
- un registre de séquence d'affichage « gestion » permettant de réaliser une alternance de quatre affichages en mode gestion ; et,
- un registre de séquence d'affichage « gestion » ouvert (« open screen ») permettant de réaliser une alternance de quatre affichages en mode ouvert gestion.

Il est à noter que si l'utilisateur ne souhaite pas utiliser les registres alphanumériques pour stocker des messages textes affichables dans la zone d'affichage alphanumérique 240, ces registres alphanumériques peuvent être utilisés comme des registres de prix/données/coefficients. Dans ce cas les informations qui y sont alors stockés ne sont utilisables par le microcontrôleur que pour afficher des informations dans les zones d'affichage de prix 110,120 pour pouvoir utiliser la gestion du micrologiciel des séparateurs des centimes et des milliers.

En variante de réalisation des versions numérique et alphanumérique de l'étiquette, les registres d'affichage ouvert peuvent servir d'emplacement de stockage supplémentaire s'ils ne sont pas utilisés en relation avec le registre de séquence d'affichage « gestion » ouvert. En particulier, il est possible d'y stocker des séquences supplémentaires de type client ou gestion qui peuvent alors être « basculé » dans les registres de séquence d'affichage « client » et « gestion » au besoin.

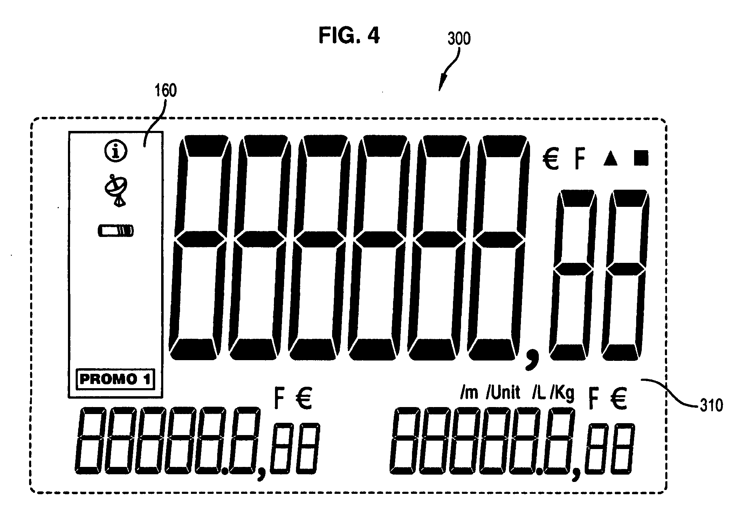

En référence à la figure 4, nous allons décrire la version à affichage ouvert de l'étiquette électronique qui comporte un afficheur à cristaux liquide 300. Ici, les capacités d'affichage sont limitées à cent quatre-vingt douze segments adressables par le microcontrôleur et sont répartis comme suit :
- une zone d'affichage de pictogrammes 160 ; et
- une zone d'affichage ouvert 310 qui peut être dessinée de manière libre tant que le nombre de segments de cette zone ne dépasse pas le nombre segments adressables par le microcontrôleur moins le nombre de pictogrammes de la zone d'affichage 160, soit ici un maximum de cent quatre-vingt huit segments pour la zone d'affichage ouvert 310.

Le jeu de mémoires de l'étiquette électronique fonctionnant en mode ouvert comporte :
- quatre registres d'affichage ouvert (« open screen ») de cent quatre-vingt huit bits permettant de mémoriser une image écran affichable directement dans les zones d'affichage ouvert 310 ;
- un registre de séquence d'affichage « client » permettant de réaliser une alternance de quatre affichages en mode client ; et,
- un registre de séquence d'affichage « gestion » permettant de réaliser une alternance de quatre affichages en mode gestion.

Bien que présents, les quatre registres de compteur, les quinze registres de prix/données/coefficient (dont trois peuvent être des registres alphanumériques) et le registre de séquence d'affichage « gestion » ouvert (« open screen ») ne sont pas exploités par le microcontrôleur quand l'étiquette électronique est configuré en mode de fonctionnement ouvert (« open screen »).

Nous allons maintenant décrire plus en détail le micrologiciel pilotant le microcontrôleur d'une étiquette électronique d'un système selon l'invention ainsi que les différentes commandes susceptibles d'être reçues, principalement à partir de la station centrale (serveur) du site.

L'étiquette dispose de registres de prix/données/coefficients (quinze pour la version numérique (numérotés de 1 à F en hexadécimal) et douze pour la version alphanumérique (numérotés de 1 à C)). Ces registres comportent des informations codées comme suit :
- en format prix, six quartets de prix (un par chiffre de la zone d'affichage de prix) et deux quartets pour les symboles et séparateurs de la zone d'affichage
- en format coefficient, six quartets de mantisse et un quartet de puissance de 10.

Il est à noter qu'un seizième registre virtuel numéroté 0 correspond à la valeur 0 est prévu.

Par défaut, le registre de prix/données/coefficient numéroté 1 comprend la valeur du prix principal de l'article associé à l'étiquette.

Les quartets de prix sont codés ainsi :

| Quartet | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| Chiffre affiché | 0 | 1 | 2 | 3 | 4 | 5 | 6 | 7 | 8 | 9 | Carré bas | Carré haut | - | = | | F |

En mode de fonctionnement alphanumérique, les registres numérotés D à F comportent des informations codées comme suit :
- deux quartets pour les symboles et séparateurs ;
- trente quartets pour le registre numéroté D et quatorze quartets pour les registres numérotés E et F pour le message alphanumérique, deux quartets par
caractère dudit message.

Les doubles quartets de caractère sont codés ainsi :

| Double quartet | Caractère affiché | Double quartet | Caractère affiché |
|---|---|---|---|
| 00 | 0 | 30 | O |
| 02 | 1 | 32 | P |
| 04 | 2 | 34 | Q |
| 06 | 3 | 36 | R |
| 08 | 4 | 38 | S |
| 0A | 5 | 3A | T |
| oc | 6 | 3C | U |
| 0E | 7 | 3E | V |
| 10 | 8 | 40 | W |
| 12 | 9 | 42 | X |
| 14 | A | 44 | Y |
| 16 | B | 46 | Z |
| 18 | C | 48 | ESPACE |
| 1A | D | 4A | + |
| 1C | E | 4C | = |
| 1E | F | 4E | \| |
| 20 | G | 50 | / |
| 22 | H | 52 | - |
| 24 | I | 54 | $ |
| 26 | J | 56 | Yen |
| 28 | K | 58 | Carré haut |
| 2A | L | 5A | Carré bas |
| 2C | M | 5C | Caractère spécial |
| 2E | N | 5E | Caractère spécial |

Les deux caractères spéciaux permettent de gérer le type d'affichage du message alphanumérique (statique/défilement). En particulier, dans le cas d'une zone d'affichage alphanumérique 240 de six caractères, l'affichage est rendu statique en positionnant l'un des deux caractères spéciaux en septième position dans le corps du message alphanumérique à affiché. Il est à noter que, si nécessaire, les registres alphanumériques numérotés de D à F peuvent être utilisé comme registres de prix/données/coefficient dont le codage des informations de prix/données/coefficient suit les règles ci-dessus associées à ce type de registre.

De plus, les codages de quartets présentés ne sont que des exemples illustratifs. D'autres codages peuvent être utilisés dans le cadre de l'invention sans sortir de celle-ci.

Le micrologiciel 1 permet de faire faire des opérations de calcul au microcontrôleur entre les différents registres de prix/données/coefficients du type: (premier registre de prix/données) opération (deuxième registre de prix/données/coefficient) = (troisième registre de prix/données/coefficient), où l'opération est soit l'addition, soit la soustraction, soit la multiplication. Le calcul est déclenché automatiquement après envoi à l'étiquette des commandes suivantes : transmission de prix ou transmission de prix principal ou transmission de coefficient ou transmission de formule.

Le registre virtuel 0 permet de faire une copie automatique d'un registre de prix/données/coefficient vers un autre registre de prix/données/coefficient en utilisant l'addition.

Lors d'une addition ou d'une soustraction, la position de la virgule des deux opérandes (c'est-à-dire des deux registres de prix/données utilisés) doivent être identiques (soit en position centime soit en position millier).

La multiplication s'effectue toujours entre un registre de prix et un registre de coefficient. Le résultat est arrondi par rapport à la position de la virgule de destination selon les conventions habituelles (si <0.5 alors 0, si >= 0.5 alors 1). Le microcontrôleur peut effectuer une division entre un registre de prix et un registre de coefficient : il effectue en fait une multiplication par l'inverse du registre de coefficient.

Pour éviter d'éventuelles erreurs de prix calculés selon les formules de calculs précédentes, la station centrale peut posséder des moyens pour vérifier la plausibilité d'un résultat de l'opération et vérifier en particulier que le résultat de l'opération est inférieur ou égal à 999999 (dans le cas d'un affichage sur six digits).

Concernant les registres d'affichage ouvert, à chaque bit de ces registres correspond un segment de l'afficheur à cristaux liquide contenu soit dans la zone d'affichage ouvert 310, soit dans l'une des zones d'affichage de prix 110,120,130,140 ou alphanumérique 240. Ledit bit est mis à 0, le segment correspondant est éteint. Inversement ledit bit est mis à 1, le segment est allumé. Cela est valable aussi pour les registres de compteur de l'étiquette. Quelque soit son mode de fonctionnement, l'étiquette électronique d'un système selon l'invention comporte une zone d'affichage de pictogrammes 160. Les pictogrammes 161,162,163,164 ont la possibilité d'être exploités par le micrologiciel et le microcontrôleur selon deux modes de fonctionnement :
- un mode système : chacun des pictogrammes répond à une règle de fonctionnement pré-codée dans le micrologiciel ;
- un mode général : les pictogrammes sont accessibles et affichées indépendamment de toute autre information ou séquence sur l'afficheur à cristaux liquides.

Il est possible de rendre le pictogramme 161 (information) ou 164 (promotion) dépendant d'un prix affiché. Cette fonction est utile dans le cas où ce pictogramme est utilisé comme un symbole clignotant de promotion.

Comme il a été décrit ci-dessus, l'étiquette comporte des registres de séquences d'affichage client, gestion ou encore gestion ouvert. Une séquence est une configuration d'affichage de l'étiquette, ici de un à quatre écrans, chaque écran disposant de sa propre temporisation d'affichage. Il existe ici deux type de séquences :
- la séquence client : pour un affichage standard destiné à afficher des informations aux consommateurs ;
- la séquence gestion et/ou gestion ouvert : pour un affichage secondaire destiné à afficher des informations de gestion.

En mode de fonctionnement numérique et alphanumérique, l'étiquette dispose d'une séquence client de quatre écrans, une séquence gestion de quatre écrans et une séquence gestion ouvert de quatre écrans. Chaque écran d'une séquence comporte quatre quartets, chacun permettant d'associer le contenu d'un registre de prix/données/coefficient ou alphanumérique à la zone d'affichage de prix 110, 120, 130, 140 ou alphanumérique 240, un quartet permettant d'associer l'un des registres compteur à la zone d'affichage compteur 170, et enfin un quartet contenant la valeur de temporisation pour l'affichage de l'écran. Concernant la valeur de temporisation, la valeur du quartet correspond, ici, au nombre de tics d'horloge moins un. Toutefois, la durée de défilement d'un message alphanumérique, si celui-ci comporte plus de six caractères, dans la version alphanumérique, est prioritaire à la valeur de temporisation de l'écran l'affichant : ainsi le défilement complet dudit message est terminé avant de passer à l'écran suivant de la séquence considéré.

En mode de fonctionnement affichage ouvert, l'étiquette dispose d'une séquence client de quatre écrans et une séquence gestion de quatre écrans, toutes deux de type affichage ouvert. Dans ce cas, la séquence d'affichage est définie sur un quartet ou chaque bit du quartet représente un écran d'affichage ouvert et indique s'il faut afficher ou non cet écran (bit 0 = écran 1, bit 1 = écran 2, etc...). Par exemple, si le quartet définissant la séquence client est de 0x09h, l'étiquette bouclera continuellement sur les pages 1 (bit 0 à 1) et 4 (bit 3 à 1). Comme précédemment une valeur de temporisation sur un quartet est associée à chacun des écrans de la séquence. Dans ce cas, le codage d'une séquence est simplifiée car il n'y a qu'une seule zone d'affichage possible : la zone d'affichage ouvert 310. Il est à noter que la séquence gestion ouvert mémorisable dans le registre de séquence d'affichage « gestion » ouvert pour une étiquette en mode de fonctionnement numérique ou alphanumérique fonctionne de la même manière. En effet, dans cette situation, les zones d'affichage de prix 110,120,130,140, d'affichage alphanumérique 240 et d'affichage compteur 160 ne forment plus qu'une seule zone d'affichage similaire à la zone d'affichage ouvert 310 d'une étiquette fonctionnant en mode affichage ouvert.

Il est à noter que la séquence client est prioritaire sur tous les autres affichages, à l'exception de l'affichage d'alertes systèmes.
En effet, lorsque le gestionnaire situé au niveau de la station centrale détecte un problème entre sa base article et celle du back-office, l'étiquette correspondant à l'article doit être bloquée sur un message système radicalement différente d'un prix, afin d'alerter l'exploitant du site. Deux alertes principales sont répertoriées :
- l'affichage de, par exemple, « SUPP » dans la zone d'affichage de prix principal permet d'indiquer à l'exploitant que l'article à été supprimé de la base sur un ordre provenant du back-office ;
- l'affichage de, par exemple, « INCONN » permet d'indiquer à l'exploitant que l'article qui vient d'être affecté à l'étiquette n'existe pas dans la base article du gestionnaire.

Pour permettre cet affichage, l'étiquette dispose d'une commande d'affichage image écran sur cinq chiffres de la zone d'affichage de prix principal (soit 35 segments ou bits). A réception de cette commande, l'étiquette efface toutes les informations affichées sur l'afficheur pour n'afficher que le contenu de l'image écran sur les cinq chiffres les plus faibles de la zone d'affichage du prix principal de l'afficheur. Seule une commande du gestionnaire permet de revenir à un affichage standard. Bien entendu, il est possible de prévoir d'autres types d'alertes systèmes que les deux ci-dessus décrits.

Afin de permettre un test, une validation d'une installation sur un site ou le fonctionnement d'une étiquette pouvant être située dans des recoins de la zone de couverture du site ou à proximité d'éléments perturbateurs, l'étiquette électronique d'un système selon l'invention comporte en outre deux compteurs de boucle (un par boucles d'émission couvrant le site) de messages reçus. Cela permet de valider la bonne réception de l'étiquette. Ces compteurs sont initialisés à zéro lors de l'initialisation de l'étiquette ou suite à une commande de la station centrale ou d'un terminal portable. Nous aborderons ultérieurement ces commandes. Une commande temporisée permet l'affichage en alternance de ces compteurs sur l'afficheur de cristaux liquides de l'étiquette.

Il existe deux cas d'initialisation de l'étiquette :
- lorsque l'étiquette n'a jamais été utilisée (première initialisation) l'envoi à l'étiquette d'un message de code magasin ou site est indispensable pour accéder à l'étiquette, toutefois cette valeur de code n'est pas importante : elle ne sera ni interprétée ni sauvegardée. L'étiquette interprète toute commande qui lui est alors envoyé, dont l'initialisation et la mémorisation d'une valeur de code magasin dans la mémoire de l'étiquette.
- lorsque l'étiquette est en cours d'utilisation, la valeur du code est discriminante et doit être identique à la valeur sauvegardée dans la mémoire de l'étiquette.

Lors d'un fonctionnement, l'étiquette électronique d'un système selon l'invention teste la présence d'un champ fort d'émission tous les tics d'horloge. Le champ fort d'émission est émis par un terminal portable. Dans le cas d'une émission radio, les communications en champ fort d'émission s'effectuent en modulation FSK.
De même, toutes les soixante et une secondes par exemple, l'étiquette teste la présence d'un champ faible d'émission. Le champ faible d'émission est émis par les boucles d'émission couvrant le site et liées à la station centrale. Les communications en champ faible s'effectuent en modulation QPSK dans le cas d'une émission radio.
Une fois entrée en phase de réception de champ fort ou faible, l'étiquette se place en « hors temps » et dispose de huit tics d'horloge pour recevoir un message de synchronisation, puis de vingt tics d'horloge pour réceptionner le code magasin ou site. Une fois ce code reçu, l'étiquette reste synchronisée jusqu'à la perte du signal ou la réception d'une commande d'arrêt de synchronisation.

Enfin, l'étiquette comporte en mémoire un certain nombre d'emplacements pour des drapeaux et paramètres permettant de modifier et d'adapter le fonctionnement de l'étiquette.

Ces drapeaux et paramètres comprennent :
- un drapeau contenant le mode de fonctionnement de l'étiquette dont la valeur sur un quartet est configurée en fin de chaine de fabrication et de montage de l'étiquette via des broches d'entrée situées sur le circuit imprimée (bit 0 = version numérique, bit 1 = version alphanumérique, bit 2 = version affichage ouvert) ;
- un drapeau contenant le statut de l'affichage sur un quartet : défilement en cours ou non, affichage de la zone d'affichage compteur 170 demandé ou non, affichage bloqué ou non, zone d'affichage de prix principale 110 statique ou clignotant ;
- un drapeau contenant le statut général de l'étiquette sur un quartet : affichage client ou gestion, restauration ou non des paramètres demandée, étiquette initialisée ou non ;
- un drapeau contenant le statut des temporisation en cours sur un quartet : réception en champ faible d'émission en cours ou non, commandes temporisées en cours ou non, séquence d'affichage en cours ou non, affichage du pictogramme de réception 162 en cours ou non ;
- un drapeau contenant l'état de synchronisation de l'étiquette sur un quartet : étiquette synchronisée ou non, « hors temps » en cours ou non, en champ fort ou faible d'émission, message reçu autorisé ou non ;
- un drapeau contenant la configuration des pictogrammes 161,162,163,164 en mode système sur un quartet, un bit par pictogramme ;
- un drapeau contenant la configuration d'affichage en mode clignotant des pictogrammes 161,162,163,164 sur un quartet, un bit par pictogramme ;
- un drapeau contenant la configuration d'affichage des pictogrammes 161,162,163,164 sur un quartet, un bit par pictogramme ;
- un drapeau contenant diverses situations sur un quartet : affichage des compteurs de boucle des messages reçus, niveau d'alerte du test de la pile, calcul demandé ou non, accès autorisé ou non à l'étiquette ;
- un drapeau contenant l'état d'affichage de l'étiquette sur un quartet : temporisation définie ou non, affichage image écran en cours ou non, compte à rebours en cours ou non, mode d'affichage des séparateurs 114,124,134 en millimes ou en milliers ;

Nous allons maintenant décrire un mode de transmission préféré de commandes utilisé dans un système d'étiquettes électroniques selon l'invention.
Dans le cas illustratif présent, les commandes envoyées à une ou plusieurs étiquette du système selon l'invention sont formatées sous forme de paquets dit « TLV » :
- T(ype) : comprend le code de la commande sur un quartet
- L(ongeur) : comprend la longueur en quartets du bloc V sur un ou deux quartets selon la commande
- V(aleur) : comprend les données relatives à la commande sur plusieurs quartets.

De ce fait, le message transmis à l'étiquette se présente sous la forme d'un ensemble de paquets TLV borné par un paquet contenant l'adresse de l'étiquette destinataire codée sur dix-huit quartets maximum (par exemple formée du code magasin + code EAN de l'article associé à l'étiquette concernée) et un paquet comprenant une valeur de somme de contrôle en fin de message (bornes incluses). Des zéros peuvent être ajoutés en fin de message si nécessaire afin que le nombre de quartets du message soit modulo 8. La somme de contrôle est, ici, telle que la somme de tous les quartets du message modulo 16 soit nulle.

Lors d'une transmission de la station centrale vers les étiquettes du site ou du magasin, les différents messages sont concaténés sous forme d'un télégramme comprenant :
- Un message de réveil constitué d'une adresse collective commune à toutes les étiquettes et de la commande code magasin ;
- les différents messages à transmettre aux étiquettes ; et
- un message constitué de l'adresse collective et d'une commande d'arrêt de synchronisation.

A titre d'exemple illustratif, voici une liste de commandes qui peuvent être transmises de la station centrale à une étiquette :
- la transmission de prix ou de données pour un registre de prix/données donné ;
- la transmission du prix principal situé par défaut dans le registre de prix numéroté 1 ;
- la transmission d'un coefficient pour un registre de coefficient donné;
- transmission d'un message alphanumérique pour un registre alphanumérique donné ;
- la transmission de l'image écran pour les registres de compteur affichable dans la zone d'affichage compteur 170 ;
- la transmission des données des écrans d'affichage ouvert dans un registre d'affichage ouvert donné ;
- la transmission des séquences d'affichage pour un registre de séquence d'affichage donné (client, gestion, gestion ouvert) ;
- la transmission des formules de calcul ;
- la transmission des cadences ou des valeurs de temporisation d'affichage pour les séquences d'affichage, l'affichage clignotant, le défilement des messages alphanumériques, etc... ;
- la transmission de commandes temporisées à l'étiquette. Cette transmission doit être précédée impérativement par la transmission d'une commande de temporisation de ces commandes temporisées. Parmi ces commandes temporisées, il y a :
   ■ basculement de l'étiquette en mode gestion et affichage de la séquence de gestion ou de gestion ouvert pendant la temporisation préalablement définie ;
   ■ affichage des quatre derniers chiffres du code EAN associé à l'étiquette ;
   ■ basculement de l'afficheur à cristaux liquides en veille ;
   ■ affichage du contenu de l'un des registres de prix/coefficient ;
   ■ affichage d'un test de la pile de l'étiquette ;
   ■ affichage de messages d'alertes système ;
   ■ affichage de tous les segments de l'afficheur à cristaux liquides ;
   ■ affichage des compteurs de boucle de messages reçus.
- la configuration des pictogrammes système 161,162,163,164 ;
- la transmission de commandes diverses comme :
   ■ réinitialiser à zéro les compteurs de boucle de messages reçus ;
   ■ incrémenter l'un des compteurs de boucle de messages reçus ;
   ■ configurer en affichage clignotant ou statique une zone d'affichage de l'afficheur de l'étiquette ;
   ■ retour à un affichage standard ;
   ■ restaurer une séquence d'affichage préalablement stockée dans l'un des registres d'affichage ouvert vers un registre de séquence d'affichage donné;
   ■ effecteur un test de la pile ;
   ■ configurer le fonctionnement des séparateurs 114,124,134,144 ;
   ■ mettre à jour les séparateurs et symboles/monnaies des registres de prix ;
   ■ sauvegarder le code EAN dans un des registres de prix/données/coefficient ;
- la transmission de commandes système comme :
   ■ restreindre le traitement d'un message transmis à un groupe d'étiquettes électroniques donné ;
   ■ arrêt de la synchronisation ;
   ■ déclencher un compte à rebours au niveau de l'étiquette. Cette dernière s'endort puis se réveille à la fin du compte à rebours ;
- la transmission du code du site ou du magasin ;
- l'initialisation de différentes adresses associé à l'étiquette (adresse longue, adresse courte, adresse(s) de groupe, etc...) : l'utilisation d'adresses de groupe permet de transmettre en une seule fois un message à l'ensemble des étiquettes du groupe ayant cette adresse de groupe.

Comme nous pouvons le constater à la vue de ce qui précède, un système d'étiquettes électroniques selon l'invention présente d'importantes possibilités d'affichage et permet une personnalisation fine des étiquettes selon le client, propriétaire du site où le système selon l'invention est destiné à être déployé. Les variantes de fonctionnement telles que décrites ci-dessus permettent d'avoir un socle commun circuit imprimé et micrologiciel qui réduit les coûts de production de l'étiquette : seul l'afficheur à cristaux liquide est variable et est associé à une variante de fonctionnement. Il n'intervient qu'en fin de production.

D'autre part, une telle structure d'étiquette nécessite la transmission de données en plus grande quantité. Cela est compensé par l'utilisation d'une modulation QPSK en radio permettant des transmissions de données à 4800 bauds environ, d'une part, et, d'autre part, par la mutualisation au sein d'un même message de différentes commandes destinées à une ou plusieurs étiquettes repérés par l'utilisation d'une adresse courte ou d'une adresse de groupe. En corollaire, un tel adressage de groupe permet de ne réveiller que les étiquettes concernées et permet donc de réduire la consommation d'énergie du système selon l'invention.

D'un point de vue sécurité, celle-ci est renforcée. En effet, les messages sont concaténés dans un télégramme qui débute obligatoirement par l'envoi du code magasin. Si ce dernier ne correspond pas à celui mémorisé par l'étiquette, cette dernière stoppe la réception des messages du télégramme. Au surplus, lors de l'attribution des adresses longue, courte et de groupe, ces dernières débutent (ou finissent) par le code magasin. Cette redondance permet une couche supplémentaire de sécurité.

Bien entendu, il est possible d'apporter des modifications à l'invention sans sortir du cadre de celle-ci.

## Revendications

1. Système d'étiquettes électroniques notamment pour l'affichage des prix dans un magasin, comprenant une station centrale et une série d'étiquettes électroniques répartie, ainsi que des moyens de communication notamment sans fil pour transmettre des informations de la station centrale vers les étiquettes, chaque étiquette électronique comportant un microcontrôleur destiné à mettre en oeuvre un micrologiciel (1) et connecté à une mémoire comportant une série de registres et à un afficheur à cristaux liquides (100;200;300) comportant au moins une zone d'affichage (110,120,130,140,170;240;310), **caractérisé en ce que** chaque étiquette comporte un drapeau dont une valeur est figeable par une configuration sur un circuit imprimé associé à l'afficheur à cristaux liquides (100;200;300) et lui permet de fonctionner tant en mode numérique qu'en mode alphanumérique ou qu'en mode affichage ouvert, lequel mode affichage ouvert est associé à un afficheur d'affichage libre limité à un nombre de segments prédéterminés, de manière exclusive.

2. Système selon la revendication 1, **caractérisé en ce que** la mémoire comporte une série de registres de prix et/ou de données et/ou de coefficient, l'étiquette comportant des moyens pour effectuer des calculs entre un premier et un deuxième registres de prix et/ou de données et/ou de coefficient selon une série de formules transmises de la station centrale à une étiquette et mémorisées dans la mémoire.

3. Système selon la revendication 2, **caractérisé en ce que** le résultat d'un calcul est mémorisé dans un troisième registre de prix et/ou de données et/ou de coefficient de la série de registres de prix et/ou de données et/ou de coefficient.

4. Système selon l'une des revendications 2 ou 3, **caractérisé en ce que** les informations transmises de la station centrale à une étiquette comportent une instruction d'affectation d'information dans un registre de prix et/ou de données et/ou de coefficient qui, une fois reçue, déclenche un recalcul des formules mémorisées.

5. Système selon l'une des revendication 2 à 4, **caractérisé en ce qu'**une partie des registres de la série de registres de prix et/ou de données et/ou de coefficient sont destinées à mémoriser des messages alphanumériques.

6. Système selon l'une des revendications 1 à 5, **caractérisé en ce que** la mémoire comporte une série de registres d'affichage ouvert.

7. Système selon l'une des revendication 2 à 6, **caractérisé en ce que** les informations transmises de la station centrale à une étiquette comprennent des instructions d'affectation entre un registre de la mémoire et une zone d'affichage de l'afficheur.

8. Système selon l'une des revendications 1 à 7, **caractérisé en ce qu'**un ensemble d'instructions transmis de la station centrale à une étiquette est mutualisé dans un message unique commençant par l'adresse de l'étiquette.

9. Système selon la revendication précédente, **caractérisé en ce qu'**un ensemble de messages transmis de la station centrale vers la série d'étiquettes est concaténé en un seul télégramme commençant par une instruction d'envoi d'un code magasin et se terminant par une instruction d'arrêt de la réception de la série d'étiquettes.

10. Système d'étiquettes électroniques selon l'une des revendications 1 à 9, **caractérisé en ce que** chaque étiquette comporte en outre dans sa mémoire une série de registres de séquences d'affichages et **en ce que** les informations transmises de la station centrale à une étiquette comporte une instruction d'initialisation d'un registre de séquences d'affichage déterminé avec une série d'instructions d'affectation du contenu d'un registre déterminée vers une zone d'affichage déterminée de l'afficheur.

11. Système selon la revendication 10, **caractérisé en ce que** les informations transmise de la station centrale à une étiquette comportent en outre une donnée de temporisation à partir de laquelle l'étiquette détermine un paramètre temporel relatif à au moins une affectation de la série d'instruction d'affectation.

## Patentansprüche

1. System für elektronische Label, insbesondere zur Anzeige von Preisen in einem Geschäft, mit einer Zentralstation und einer Reihe von verteilten elektronischen Label, sowie Kommunikationsmitteln, insbesondere drahtlosen Kommunikationsmitteln, zum Übertragen von Informationen von der Zentralstation zu den Label, wobei jedes elektronische Label aufweist: einen Mikroprozessor, der eingerichtet ist, eine Firmware (1) auszuführen, und der mit einem Speicher mit einer Reihe von Registern und mit einer Flüssigkristallanzeige (100; 200; 300) mit zumindest einem Anzeigebereich (110, 120, 130, 140, 170; 240; 310) verbunden ist, **dadurch gekennzeichnet, dass** jedes Label einen Merker aufweist, dessen Wert durch eine Konfiguration einer gedruckten Schaltung, die der Flüssigkristallanzeige (100; 200; 300) zugeordnet ist, festgelegt ist und zulässt, dass die Flüssigkristallanzeige sowohl in einem numerischen Modus als auch in einem alphanumerischen Modus oder einem offenen Anzeigemodus, wobei der offene Anzeigemodus einer Anzeige zur freien Anzeige zugeordnet ist, die auf eine Anzahl von vorbestimmten Segmenten begrenzt ist, ausschließlich betrieben wird.

2. System gemäß Anspruch 1, **dadurch gekennzeichnet, dass** der Speicher eine Reihe von Preisregistern und/oder Datenregistern und/oder Koeffizientenregistern umfasst, wobei das Label Mittel zum Durchführen von Berechnungen zwischen einem ersten Register und einem zweiten Register aus den Preisregistern und/oder Datenregistern und/oder Koeffizientenregistern entsprechend einer Reihe von Formeln umfasst, die von der Zentralstation zu einem Label übertragen werden und in dem Speicher gespeichert sind.

3. System gemäß Anspruch 2, **dadurch gekennzeichnet, dass** das Ergebnis einer Berechnung in einem dritten Register aus den Preisregistern und/oder Datenregistern und/oder Koeffizientenregistern aus der Reihe von Preisregistern und/oder Datenregistern und/oder Datenregistern und/oder Koeffizientenregistern gespeichert wird.

4. System gemäß einem der Ansprüche 2 oder 3, **dadurch gekennzeichnet, dass** die von der Zentralstation zu dem Label übertragenen Informationen eine Anweisung über die Zuordnung der Information in einem Preisregister und/oder Datenregister und/oder Koeffizientenregister aufweisen, welche nach deren Empfang eine Neuberechnung der gespeicherten Formeln auslöst.

5. System gemäß einem der Ansprüche 2 bis 4, **dadurch gekennzeichnet, dass** ein Teil der Register aus der Reihe von Preisregistern und/oder Datenregistern und/oder Koeffizientenregistern vorgesehen sind, alphanumerische Nachrichten zu speichern.

6. System gemäß einem der Ansprüche 1 bis 5, **dadurch gekennzeichnet, dass** der Speicher eine Reihe von Registern in Bezug auf die offene Anzeige aufweist.

7. System gemäß einem der Ansprüche 2 bis 6, **dadurch gekennzeichnet, dass** die von der Zentralstation zu dem Label übertragenen Informationen Anweisungen über die Zuordnung zwischen einem Register des Speichers und einem Anzeigebereich der Anzeige aufweisen.

8. System gemäß einem der Ansprüche 1 bis 7, **dadurch gekennzeichnet, dass** ein von der Zentralstation zu dem Label übertragener Satz Anweisungen in einer einzigen Nachricht, die mit der Adresse des Labels beginnt, gebündelt wird.

9. System gemäß dem vorangehenden Anspruch, **dadurch gekennzeichnet, dass** ein von der Zentralstation zu der Reihe von Label übertragener Satz Nachrichten zu einem einzigen Telegramm verkettet ist, das mit einer Geschäftscodessendeanweisung beginnt und mit einer Empfangshalteanweisung hinsichtlich der Reihe von Label endet.

10. System für elektronische Label gemäß einem der Ansprüche 1 bis 9, **dadurch gekennzeichnet, dass** jedes Label weiterhin in dessen Speicher eine Reihe von Anzeigesequenzregistern umfasst, und dass die von der Zentralstation zu einem Label übertragenen Informationen eine Initialisierungsanweisung von einem bestimmten Anzeigesequenzregister nebst einer bestimmten Reihe von Zuordnungsanweisungen des Inhalts von einem Register zu einem bestimmten Anzeigebereich der Anzeige umfassen.

11. System gemäß Anspruch 10, **dadurch gekennzeichnet, dass** die von der Zentralstation zu einem Label übertragenen Informationen weiterhin Verzögerungsdaten aufweisen, von denen das Label einen Zeitparameter in Bezug auf zumindest eine Zuordnung der Reihe von Zuordnungsanweisungen bestimmt.

## Claims

1. A system of electronic labels, notably for displaying prices in a shop, comprising a central station and a distributed series of electronic labels, as well as, notably wireless, communication means for transmitting information from the central station to the labels, each electronic label including a microcontroller intended for applying a microsoftware package (1), and connected to a memory including a series of registers and to a liquid crystal display (100; 200; 300) including at least one display area (110, 120, 130, 140, 170; 240; 310), **characterized in that** each label includes a flag, a value of which may be set by a configuration on a printed circuit associated with the liquid crystal display (100; 200; 300) and allows it to operate both in a numerical mode and in an alphanumerical mode or in an open display mode, which open display mode is associated with a display device with free display limited to a number of predetermined segments, exclusively.

2. The system according to claim 1, **characterized in that** the memory includes a series of price and/or data and/or coefficient registers, the label including means for carrying out calculations between first and second price and/or data and/or coefficient registers according to a series of formulae transmitted from the central station to a label and stored in the memory.

3. The system according to claim 2, **characterized in that** the result of a calculation is stored in memory in a third price and/or data and/or coefficient register of the series of price and/or data and/or coefficient registers.

4. The system according to one of claims 2 or 3, **characterized in that** the pieces of information transmitted from the central station to a label include an instruction for allocating information in a price and/or data and/or coefficient register which, once received, triggers recalculation of the formulae stored in memory.

5. The system according to one of claims 2 to 4, **characterized in that** a portion of the registers of the series of price and/or data and/or coefficient registers are intended to store alphanumerical messages in memory.

6. The system according to one of claims 1 to 5, **characterized in that** the memory includes a series of open display registers.

7. The system according to one of claims 2 to 6, **characterized in that** the pieces of information transmitted from the central station to a label comprise instructions for allocation between a register of the memory and a display area of the display device.

8. The system according to one of claims 1 to 7, **characterized in that** a set of instructions transmitted from the central station to a label is mutualized in a single message starting with the address of the label.

9. The system according to the preceding claim, **characterized in that** a set of messages transmitted from the central station to the series of labels is concatenated in a single telegram starting with an instruction for sending a shop code and ending with an instruction for stopping reception of the series of labels.

10. The electronic label system according to claims 1 to 9, **characterized in that** each label further includes in its memory a series of registers of display sequences and **in that** the pieces of information transmitted from the central station to a label include an instruction for resetting a register of display sequences, determined with a series of the instructions for determined allocation of the contents of a register to a determined display area of the display device.

11. The system according to claim 10, **characterized in that** the pieces of information transmitted from the central station to a label further include a timing datum from which the label determines a time parameter relating to at least one allocation of the allocation instruction series.
